(19) **Europäisches Patentamt**

**European Patent Office**

**Office européen des brevets**

(11) **EP 0 724 203 A1**

(12) **EUROPEAN PATENT APPLICATION**

(43) Date of publication:
31.07.1996 Bulletin 1996/31

(51) Int. Cl.⁶: **G03H 1/10**, G01B 9/021,
G03H 1/02

(21) Application number: 96100848.9

(22) Date of filing: 22.01.1996

(84) Designated Contracting States:
**DE FR GB IT**

(30) Priority: **27.01.1995 EP 95101171**

(71) Applicant: **Steinbichler, Hans, Dr.**
**D-83115 Neubeuern (DE)**

(72) Inventors:
• **Labrunie, Laurent**
**F-91160 Longjumeau (FR)**

• **Pauliat, Gilles**
**F-91940 Les Ulis (FR)**
• **Roosen, Gérald**
**F-78720 La Celle Les Bordes (FR)**

(74) Representative: **Zinnecker, Armin, Dipl.-Ing. et al**
**Lorenz-Seidler-Gossel,**
**Widenmayerstrasse 23**
**80538 München (DE)**

(54) **Holographic method for the recording of interferograms**

(57)    A Holographic method is used for the recording of interferograms. The method is characterized by the fact that at least 2 phase-shifted images are recorded simultaneously.

Fig. 4

EP 0 724 203 A1

## Description

The invention relates to a holographic method for the recording of interferograms.

State of the art:

Conventional holographic interferometry with double-exposed holograms is applied in industry for vibration analysis, deformation studies and non-destructive testing. It is already a versatile instrument in the field of research and development, but the procedure to obtain results are very complex: The holograms have to be processed, reconstructed and read into an image processing system before a quantitative evaluation can begin. Moreover, photomaterials for holography are cost intensive. This prevents the applicability of these methods for maintenance and service.

For vibration measurements under operational conditions there are even more restrictions: Holographic interferometry allows to evaluate only the relative amplitudes of vibration and their sign within a predefined time window. But it allows neither the determination of the actual phase of vibration during the hologram recording nor the calculation of relative phases between centers of vibration. Also, the frequency of vibration can not be calculated. Therefore, additional techniques like laser doppler vibrometry or piezoceramic vibration sensors have to be applied. But these techniques allow only punctual measurements, so that the complete information of a vibration can only be calculated for the neighbourhood areas of the additional sensors.

It is the object of the invention to overcome these drawbacks.

This object is accomplished by a holographic method according to claim 1.

Prefered embodiments are described in the subclaims.

The invention describes a holographic technique for real time analysis.

The invention is preferably carried out by using recording techniques applying the photorefractive effect.

The photorefractive effect exists in insulating crystals that are both photoconductive and electrooptic. In these crystals, a spatially modulated illumination such as the one resulting from the interference between an object wave and a reference beam creates an internal electric field distribution, wich causes a refractive index modulation inside the crystal. A hologram will thus be recorded in the material.

Three different experimental configurations for dynamic holography have been investigated:

- Diffraction Configuration:

    The photorefractive crystal is used as a photographic plate: The holograms are first recorded and read out after a delay. In this configuration, the reading beam does not interfere with the object and reference beam. This configuration is similar to a classical holographic setup.

- Two Wave Mixing Configuration

    In this configuration, the object and reference beams write an hologram on which they simultaneously diffract. The diffracted reference beam interferes with the transmitted object beam.

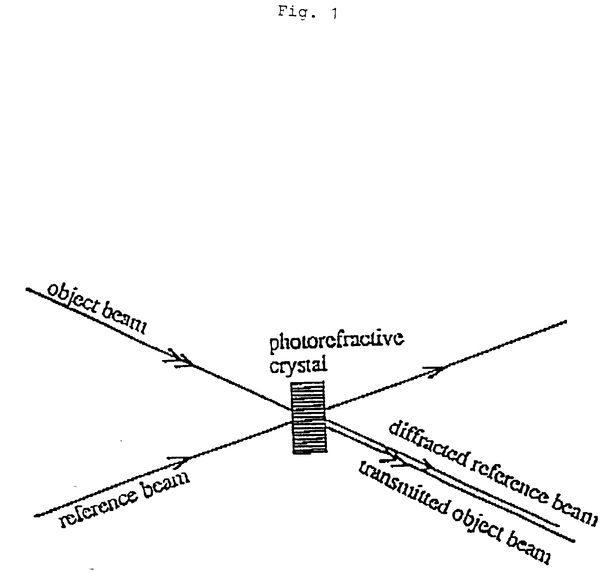

    If the experimental configuration is well chosen, the process of diffraction in dynamic materials leads to energy redistribution among the reference and object beams (figure 1). This produces an amplification of the object beam according to an exponential law in index variation times the interaction length.

    This is shown in fig. 1 which shows a two wave mixing configuration for real time interferometry; the read-out beam is the reference beam used for recording.

    This setup exhibits good sensitivity (extraction of very low signals). However, because of the existence of a uniform background, the contrast is lower than in the following configuration.

- Four Wave Mixing Configuration

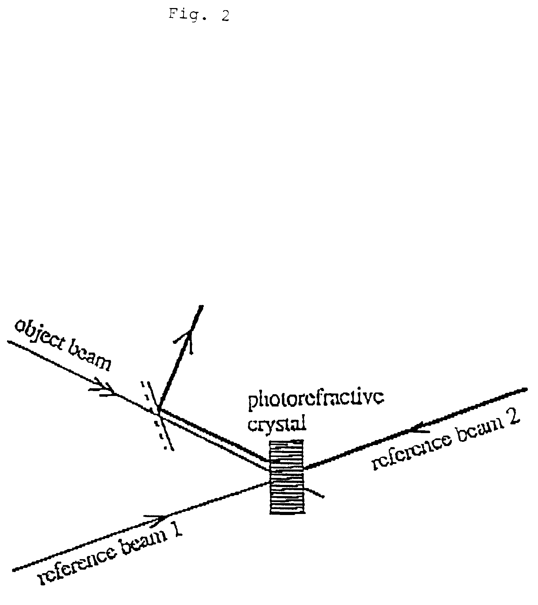

    Recording and reading-out are simultaneously performed in real time (figure 2). This differs from the diffraction configuration because the three beams (object, references 1 and 2) interact to generate the phase conjugate diffracted beam.

    This is shown in fig. 2 which shows a four wave mixing configuration for real time interferometry; the grating written by the object beam and reference beam 1 is read out by reference beam 2.

    This configuration shows lower sensitivity than the two wave mixing setup, but the contrast is better (no background).

The invention is preferably carried out by using the principle of the recording of holograms with photorefractive crystals.

The two wave mixing technique described above is well suited for real time analysis. Sillenite crystals like BTO, BGO and BSO can be used, but also other photorefractive materials and photomaterials like e.g. thermoplastic film, bacteriorhodopsin, organic and polymeric media.

The technique which will be implemented consists in achieving a double exposure with a single recording in the photorefractive crystal.

First solution is to use materials which recording time is longer than the pulse duration and shorter than the delay between succesive pulses.

Second solution is to take advantage of an important feature of some of these materials.

The recording speed of the index grating depends on the pulse fluence. At high energy, the index grating is built within pulse duration while at lower fluence, it is established after illumination.

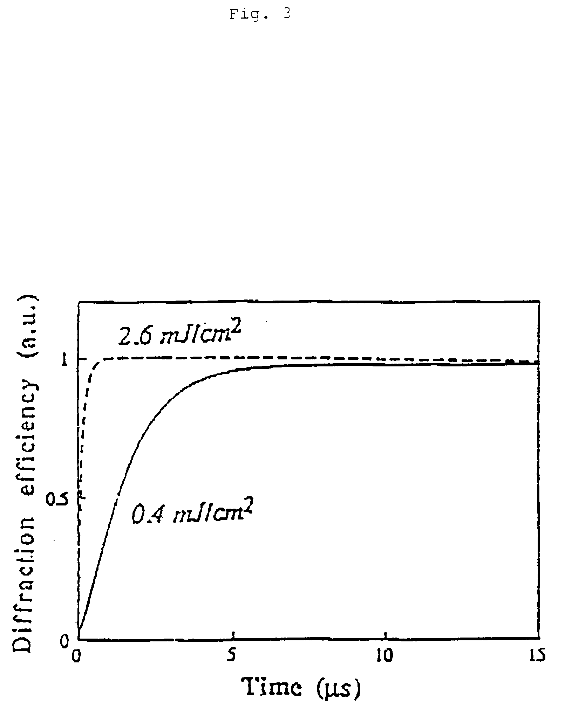

This is shown in fig. 3 which shows computer simulations of the kinetics of the square of the induced index modulation in BSO for two fluences, 2.6 mJ/cm$^2$ (dashed line) and 0.4 mJ/cm$^2$ (full line).

In this case, the technique works as follows: During the first exposure (e.g. 500 mJ light pulse), reference and object beams (e.g. angular aperture 30°) will be incident on the photorefractive crystal. With a reference beam energy (e.g. 5 mJ/cm$^2$), the index grating will fully build up in 5 - 8 ns. Reducing the fluence (e.g. by 50) for the second exposure, the recording process will take several microseconds, which is much longer than the pulse duration.

This technique also applies when the hologram recorded by the first exposure is modified during the second exposure. In this case, the exploitation of interferograms will take this modification into account.

In all solutions the amplitude of the object beam measured at the crystal output during this second exposure will be the sum of the first exposure object beam (diffraction of the second exposure reference beam on the grating recorded during the first exposure) and of the transmitted second exposure object beam. These waves add coherently (figure 1).

Noting E(t) and E(t+dt) the object field amplitudes during the first and second illuminations, the detected intensity will be:

$$I_s = I_0 \exp\{\Gamma\ell/\cos[\phi(t+d)-\phi(t)]\} = I_0\{1+\Gamma\ell/\cos[\phi(t+dt)-\phi(t)]\}$$

for small product photorefractive gain $\Gamma$ times interaction length $\ell$.

$\cos[\phi(t+dt)-\phi(t)]$ is the cosine of the phase variation (delta $\phi = \phi(t+dt)-\phi(t)$) produced by the object displacement between the two illuminations. The existence of a DC component has to be mentioned. It will be either evaluated (energy measurement) with a detector with good dynamic range for unknown $\Gamma\ell$ or computed from the known $\Gamma\ell$ previously determined on the material.

A similar series of experiments with a $\pi/2$ phase shift of the phase of the reference beam at the second exposure will give:

$$I_0 \{1 + \Gamma\ell /\sin[\phi(t+dt)-\phi(t)]\}$$

Consequently, the phase variation produced by the object displacement can be determined modulo $2\pi$.

The technique will also be carried out using more than 2 receivers (e.g. CCD-cameras), for the determination of phase shifted images and/or the background intensity.

The technique of phase determination will permit this phase determination in a single double exposure experiment, utilizing the two polarization components.

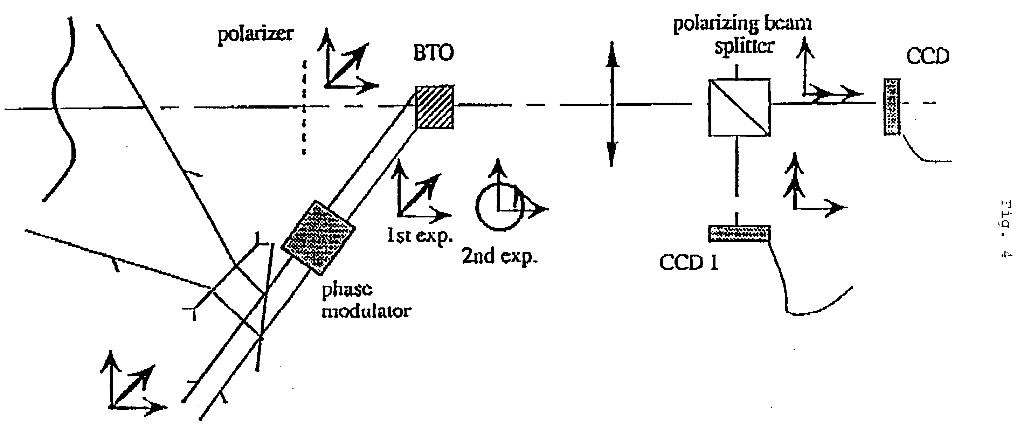

An example of implementation is shown in fig. 4 which shows a schematic representation of the photorefractive interferometric head; the bold arrows in the small set of axes represent the light polarization vectors.

Double exposure interferometry with simultaneous read-out relies on the 3 following assumptions:

-    The optical quality of the photorefractive crystal is large enough to allow the observation of the object through it without image degradation.

-    The resolution of the recorded hologram can be larger than 512 x 512 pixels.

-    Any change of the image speckle pattern between the reference intensity measurement ($I_0$) and the hologram read-out (during the second exposure) does not forbid the phase shift delta $\phi$ determination.

If these requirements are met, the invention can be carried out without any problems. But even if these requirements are not entirely met, it is possible to carry out the invention to a sufficient extent.

The invention further refers to a device for carrying out the method according to the invention, the device being characterized in a photorefractive crystal and a source for coherent rays, especially coherent light, especially laser light.

**Claims**

1.    Holographic method for the recording of interferograms, characterized by the fact that at least 2 phase-shifted images are recorded simultaneously.

2.  Holographic method according to claim 1, characterized in that 2 images which are phase-shifted by only 90° are recorded.

3.  Holographic method according to claim 1 or 2, characterized in that the background light intensity is measured by a third receiver.

4.  Holographic method according to any one of claims 1 - 3, characterized in that the light intensity of the background is measured through laser output.

5.  Holographic method according to any one of claims 1 - 4, characterized in that the phase-shifting is introduced by the change of the polarization direction.

6.  Holographic method according to any one of claims 1 - 5, characterized in that the phase-shifting is introduced with any phase shifting component, e.g. an electro-optic or ferro-electric crystal.

7.  Device for carrying out the method according to any one of claims 1 - 6, characterized by a photorefractive crystal and a source for coherent rays, especially coherent light, especially laser light.

Fig. 1

Fig. 2

Fig. 3

EP 0 724 203 A1

Fig. 4

EP 0 724 203 A1

**European Patent Office** — **EUROPEAN SEARCH REPORT**

Application Number

EP 96 10 0848

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | IBM TECHNICAL DISCLOSURE BULLETIN, vol. 29, no. 10, March 1987, NEW YORK US, pages 4256-4257, XP002002250 "ENHANCED CONTRAST HOLOGRAPHIC INTERFEROMETRY" * page 4257, line 8 - line 14 * --- | 1,5 | G03H1/10 G01B9/021 G03H1/02 |
| X | APPLIED OPTICS, vol. 27, no. 2, 15 January 1988, NEW YORK US, pages 312-320, XP002002251 M.KUJAWINSKA ET AL.: "MULTICHANNEL PHASE-STEPPED HOLOGRAPHIC INTERFEROMETRY" * page 313, left-hand column, line 17 - line 19 * --- | 1 | |
| X | US-A-5 216 527 (SHARNOFF) * column 12, line 41 - column 13, line 48 * --- | 1 | |
| A | APPLIED OPTICS, vol. 8, no. 8, August 1969, NEW YORK US, pages 1543-1550, XP002002252 A.F. METHERELL ET AL.: "TEMPORAL REFERENCE ACOUSTICAL HOLOGRAPHY" * page 1547, right-hand column - page 1548, right-hand column * --- | 2 | **TECHNICAL FIELDS SEARCHED (Int.Cl.6)** G01B G03H |
| A | TECHNISCHES MESSEN TM, vol. 58, no. 6, June 1991, MUNCHEN DE, pages 235-246, XP000235779 TH. KREIS ET AL.: "AUTOMATISCHE REKONSTRUKTION VON PHASENVERTEILUNGEN AUS INTERFEROGRAMMEN" * page 239, right-hand column * --- -/-- | 2 | |

The present search report has been drawn up for all claims

| Place of search | Date of completion of the search | Examiner |
|---|---|---|
| THE HAGUE | 6 May 1996 | Krametz, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

9

EP 0 724 203 A1

European Patent Office

**EUROPEAN SEARCH REPORT**

Application Number

EP 96 10 0848

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | OPTICS AND LASER TECHNOLOGY, vol. 25, no. 2, April 1993, HAYWARDS HEATH GB, pages 97-102, XP000361384 P. ZANETTA ET AL.: "HOLOGRAPHIC DETECTION OF DEFECTS IN COMPOSITES" * page 98, right-hand column, line 31 * --- | 2 | |
| A | APPLIED OPTICS, vol. 16, no. 6, June 1977, NEW YORK US, pages 1736-1741, XP002002253 GARY E. SOMMARGREN: "DOUBLE-EXPOSURE HOLOGRAPHIC INTERFEROMETRY USING COMMON-PATH REFERENCE WAVES" * figure 2 * --- | 5 | |
| A | OPTICS COMMUNICATIONS, vol. 41, no. 6, May 1982, AMSTERDAM NL, pages 393-396, XP002002254 P. HARIHARAN ET AL.: "A DIGITAL PHASE-MEASUREMENT SYSTEM FOR REAL-TIME HOLOGRAPHIC INTERFEROMETRY" * figure 1 * --- | 6 | TECHNICAL FIELDS SEARCHED (Int.Cl.6) |
| A | APPLIED OPTICS, vol. 29, no. 32, 10 November 1990, NEW YORK US, pages 4753-4756, XP000162131 D. TONTCHEV ET AL.: "HOLOGRAPHIC INTERFEROMETRIC MICROSCOPE ON THE BASIS OF A Bi12TiO20 CRYSTAL" * figure 1 * ----- | 7 | |

The present search report has been drawn up for all claims

| Place of search | Date of completion of the search | Examiner |
|---|---|---|
| THE HAGUE | 6 May 1996 | Krametz, E |